Europäisches Patentamt

European Patent Office

Office européen des brevets

(19)

(11) **EP 0 920 599 B1**

(12) **EUROPEAN PATENT SPECIFICATION**

(45) Date of publication and mention
of the grant of the patent:
**29.10.2003 Bulletin 2003/44**

(51) Int Cl.[7]: **G01B 9/02**

(86) International application number:
**PCT/US97/14273**

(21) Application number: **97938284.3**

(22) Date of filing: **14.08.1997**

(87) International publication number:
**WO 98/008047 (26.02.1998 Gazette 1998/08)**

(54) **Measuring the effects of the refractive index of a gas using different multiple path interferometry ( superhetrodyne )**

Messen von Effekten des Brechungsindex eines Gases mit unterschiedlicher Vielfach - Interferometrie ( superheterodyn )

Mesure des effets de l'indice de réfraction d'un gaz par interférometrie à chemins multiples différents ( superhétérodyne )

(84) Designated Contracting States:
**DE NL**

(30) Priority: **20.08.1996 US 700113**
**27.06.1997 DE 19727402**

(43) Date of publication of application:
**09.06.1999 Bulletin 1999/23**

(73) Proprietor: **ZYGO CORPORATION**
**Middlefield Connecticut 06455-0448 (US)**

(72) Inventors:
• **HILL, Henry, Allen**
**Tucson, AZ 85716 (US)**
• **DE GROOT, Peter**
**Middletown, CT 06457 (US)**

(74) Representative: **Cole, David John**
**Executive Liaison Services,**
**43 Mount Felix**
**Walton-on-Thames, Surrey KT12 2PJ (GB)**

(56) References cited:
**US-A- 5 404 222**

• **JAPANESE JOURNAL OF APPLIED PHYSICS, March 1989, Vol. 28(3), ISHIDA A., "Two-Wavelength Displacement-Measuring Interferometer Using Second-Harmonic Light to Eliminate Air Turbulence-Induced Errors", pages 587-589.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Description

## CROSS REFERENCE TO RELATED APPLICATION

This application is related to the contemporaneously filed, commonly owned, copending application by P. de Groot and H. A. Hill entitled "Superheterodyne interferometer and method for compensating the refractive index of air using electronic frequency multiplication" (US-A-5 838 485 published 17,11,98).

## FIELD OF THE INVENTION

The present invention relates to optical instruments for measuring distance and refractive index. The invention relates in particular to interferometric distance measurement independent of fluctuations in the refractive index of a gas in a measurement path.

## BACKGROUND AND PRIOR ART

A frequently-encountered problem in metrology is the measurement of the refractive index of a column of air. Several techniques exist for measuring the index under highly controlled circumstances, such as when the air column is contained in a sample cell and is monitored for temperature, pressure and physical dimension. See for example, and article entitled "An air refractometer for interference length metrology," by J. Terrien, Metrologia $\underline{1}$(3), 80-83 (1965).

Perhaps the most difficult measurement related to the refractive index of air is the measurement of index fluctuations over a measurement path of unknown or variable length, with uncontrolled temperature and pressure. Such circumstances arise frequently in geophysical and meteorological surveying, for which the atmosphere is obviously uncontrolled and the refractive index is changing dramatically because of variations in air density and composition The problem is described in an article entitled "Effects of the atmospheric phase fluctuation on long-distance measurement," by H. Matsumoto and K. Tsukahara, Appl. Opt. $\underline{23}$(19), 3388-3394 (1984), and in an article entitled "Optical path length fluctuation in the atmosphere," by G. N. Gibson et al., Appl. Opt. $\underline{23}$(23), 4383-4389 (1984).

Another example situation is high-precision distance measuring interferometry, such as is employed for in micro-lithographic fabrication of integrated circuits. See for example an article entitled "Residual errors in laser interferometry from air turbulence and non-linearity," by N. Bobroff, Appl. Opt. $\underline{26}$(13), 2676-2682 (1987), and an article entitled "Recent advances in displacement measuring interferometry," also by N. Bobroff, Measurement science & tech. $\underline{4}$(9), 907-926 (1993). Typically the correction for index fluctuations is on the order of 0.1ppm (parts per million) in magnitude, and must be accurate to 0.005ppm. These high levels of precision involve frequency-stabilized laser sources and high-resolution phase detection.

There are frequent references in the art to heterodyne methods of phase estimation, in which the phase varies with time in a controlled way. For example, in a known form of prior-art heterodyne distance-measuring interferometer, the source emits two orthogonal polarizations having slightly different optical frequencies (e.g. 2MHz). The interferometric receiver in this case is typically comprised of a linear potarizer and a photodetector to measure the time-varying interference signal. The signal oscillates at the beat frequency, and the phase of the signal corresponds to the relative phase difference. A further representative example of the prior art in heterodyne distance-measuring interferometry is taught in commonly-owned U.S. Patent No.4,688.940 to G. E. Sommargren and M. Schaham (1987). However, these known forms of interferometric metrology are limited by fluctuations in refractive index, and by themselves are unsuited to the next generation of microlithography instruments.

Another known form of interferometer for distance measurement is disclosed in U.S. Patent No.4,005,936 entitled "Interferometric methods and apparatus for measuring distance to a surface" to J. D. Redman and M. R. Wall (1977). The method taught by Redman and Wall consists of employing laser beams of two different wavelengths; each of which is split into two parts. Frequency shifts are introduced into one part of the respective beams One part of each beam reflects from an object and recombines with the other part on a photodetector to produce an interference signal. From this interference signal a difference frequency is derived whose phase is a measure of the distance to the surface The equivalent wavelength of the phase associated with the difference frequency is equal to the product of the two laser wavelengths divided by the difference of the two wavelengths. This prior art two-wavelength technique of Redman and Wall reduces measurement ambiguities, but is at least as sensitive to the deleterious effects of index fluctuations of the air as prior art single-wavelength techniques.

Another example of a prior art two-wavelength interferometer similar to that of Redman and Wall is disclosed in US-A-4 907 886 entitled "Method and apparatus for two-wavelength interferometry with optical heterodyne processes and use for position or range finding." This prior art system is also described in an article entitled "Two-wavelength laser interferometry using superheterodyne detection," by R. Dandliker, R. Thalmann, and D. Prongué, Opt. Let. $\underline{13}$ (5), 339-341 (1988) and in an article entitled "High-accuracy distance measurements with multiple-wavelength interferometry,' by R. Dandliker, K. Hug, J. Politch and E. Zimmermann. The system of Dandliker et al., as taught in US-A-4 907 886 employs laser beams of two wavelengths, each of said beams comprising two polarization components separated in frequency by means of acousto-optic modulation. After passing these beams collinearly through a Michelson interferometer, the polarization components are mixed, resulting in a heterodyne signal. In that the heterodyne signal has a different frequency for each of the two wavelengths, therefrom results a so-called super-heterodyne signal, having a frequency equal to the difference in the heterodyne frequencies, and a phase associated with an equivalent wavelength equal to the product of the two laser wavelengths divided by the difference of the two wavelengths. According to US-A-4 907 886 (cited above), the phase of said super-heterodyne signal is assumed to be dependent only on the position of a measurement object and the equivalent wavelength. Therefore, this prior art system is also not designed to measure or compensate for the fluctuations in the index of air.

Further examples of the two-wavelength superheterodyne technique developed by Redman and Wall and by Dändliker and Heerburgg (cited above) are found in an article entitled "Two-wavelength double heterodyne interferometry using a matched grating technique," by Z. Sodnik, E. Fischer, T. Ittner and H. J. Tiziani, Appl. Opt. 30(22), 3139-3144 (1991) and in an article entitled "Diode laser and fiber optics for dual-wavelength heterodyne interferometry," by S. Manhart and R. Maurer, SPIE 1319, 214-216 (1990). However, neither one of these examples addresses the problem of index fluctuations.

It may be concluded from the foregoing that the prior art in heterodyne and super-heterodyne interferometry does not provide a method and corresponding means for measuring and compensating the fluctuation of the refractive index of air. This deficiency in the prior art results in significant measurement uncertainty, thus seriously affecting the precision of systems employing such Interferometers, for example in micro-lithographic fabrication of integrated circuits. Future Interferometers will necessarily incorporate an inventive, new method and means for measuring and compensating refractive index fluctuations.

One way to detect index fluctuations is to measure changes in pressure and temperature along the measurement path and calculate the effect on refractive index of path. Mathematical equations for effecting this calculation are disclosed in an article entitled "The refractivity of air," by F. E. Jones, J. Res. NBS 86(1), 27-32 (1981). An implementation of the technique is described in an article entitled "High-accuracy displacement interferometry in air," by W. T. Estler, Appl. Opt. 24(6), 808-815 (1985). Unfortunately, this technique provides only approximate values, is cumbersome, and corrects only for slow, global fluctuations in air density.

Another, more direct way to detect index fluctuations over a path is by multiple-wavelength distance measurement. The basic principle may be understood as follows. Interferometers and laser radar measure the optical path length between a reference and an object, most often in open air. The optical path length is the integrated product of the refractive index and the physical path traversed by the measurement beam. In that the refractive index varies with wavelength, but the physical path is independent of wavelength, it is generally possible to separate the physical path length from the fluctuations in refractive index, provided that the instrument employs at least two wavelengths. The variation of index with wavelength is known in the art as dispersion, therefore this technique will be referred to hereinafter as the dispersion technique.

The dispersion technique for index measurement has a long history, and predates the introduction of the laser. An article entitled "Long-path interferometry through an uncontrolled atmosphere," by K. E. Erickson (J. Opt. Soc. Am. 52(7), 781-787 (1962)) describes the basic principles and provides an analysis of the feasibility of the technique for geophysical measurements. Additional theoretical proposals are found in an article entitled "Correction of optical distance measurements for the fluctuating atmospheric index of refraction," by P. L. Bender and J. C. Owens (J. Geo. Res. 70(10), 2461-2462 (1965)).

Commercial distance-measuring laser radar based on the dispersion technique for index compensation appeared in the 1970's. An article entitled "Two-laser optical distance-measuring instrument that corrects for the atmospheric index of refraction," by K. B. Eamshaw and E. N. Hemandez, Appl. Opt. 11(4), 749-754 (1972), discloses an instrument employing microwave-modulated HeNe and HeCd lasers for operation over a 5 to 10-km measurement path. Further details of this instrument are found in an article entitled "Field Tests of a two-laser (4416A and 6328A) optical distance-measuring instrument correcting for the atmospheric index of refraction," by E. N. Hemandez and K. B. Eamshaw, J. Geo. Res. 77(35), 6994-6998 (1972). Further examples of applications of the dispersion technique are discussed in an article entitled "Distance corrections for single- and dual-color lasers by ray tracing," by E. Berg and J. A. Carter, J. Geo. Res. 85(B11), 6513-6520 (1980), and in an article entitled "A multi-wavelength distance-measuring instrument for geophysical experiments," by L. E. Slater and G. R. Huggett, J. Geo. Res. 81(35), 6299-6306 (1976).

Although instrumentation for geophysical measurements typically employs intensity-modulation laser radar, it is understood in the art that optical interference phase detection is more advantageous for shorter distances. In U. S. Patent No.3,647,302 to R. B. Zipin and J. T. Zalusky, entitled "Apparatus for and method of obtaining precision dimensional measurements," (1972) there is disclosed an interferometric displacement-measuring system employing multiple wavelengths to compensate for variations in ambient conditions such as temperature, humidity and pressure.

The instrument is specifically designed for operation with a movable object, that is, with a variable physical path length. However, the phase-detection means of Zipin and Zalusky is insufficiently accurate for high-precision measurement.

A more modem and detailed example is the system described by Y. Zhu, H. Matsumoto, T. O'ishi in an article entitled "Long-arm two-color interferometer for measuring the change of air refractive index," SPIE 1319, Optics in complex systems, 538-539 (1990). The system of Zhu et al. employs a 1064-nm wavelength YAG laser and an 632-nm HeNe laser together with quadrature phase detection. Substantially the same instrument is described in Japanese in an earlier article by Zhu et al. entitled "Measurement of atmospheric phase and intensity turbulence for long-path distance interferometer," Proc. 3rd meeting on lightwave sensing technology, Appl. Phys. Soc. of Japan, 39 (1989). However, the interferometer of Zhu et al. has insufficient resolution for all applications, e.g. sub-micron interferometry for microlithography.

A recent attempt at high-precision interferometry for microlithography is represented by U.S. Patent No. 4,948,254 to A. Ishida (1990). A similar device is described by Ishida in an article entitled Two wavelength displacement-measuring interferometer using second-harmonic light to eliminate air-turbulence-induced errors," Jpn. J. Appl. Phys. 28(3), L473-475 (1989). In the article, a displacement-measuring interferometer is disclosed which eliminates errors caused by fluctuations in the refractive index by means of two-wavelength dispersion detection. An Ar$^+$ laser source provides both wavelengths simultaneously by means of a frequency-doubling crystal known in the art as BBO. The use of a BBO doubling crystal results in two wavelengths that are fundamentally phase locked, thus greatly improving the stability and accuracy of the refractive index measurement. However, the phase detection means, which employ simple homodyne quadrature detection, are insufficient for high resolution phase measurement. Further, the phase detection and signal processing means are not suitable for dynamic measurements, in which the motion of the object results in rapid variations in phase that are difficult to detect accurately.

In U.S. Patent No.5,404,222 entitled "Interferometric measuring system with air turbulence compensation" to S. A. Lis (1995), there is disclosed a two-wavelength interferometer employing the dispersion technique for detecting and compensating index fluctuations. A similar device is described by Lis in an article entitled "An air turbulence compensated interferometer for IC manufacturing," SPIE 2440 (1995). Improvement on U. S. Patent No. 5.404,222 by S. A. Lis is disclosed in U. S. Patent No. 5,537,209 issued July 1996. The principle innovation of this system with respect to that taught by Ishida in Jpn. J. Appl. Phys. (cited above) is the addition of another BBO doubling crystal to improve the precision of the phase detection means. The additional BBO crystal makes it possible to optically interfere two beams having wavelengths that are exactly a factor of two different. The resultant interference has a phase that is directly dependent on the index of refraction but is substantially independent of stage motion. However, the system taught by Lis has the disadvantage that it is complicated and requires an additional BBO crystal for every measurement path. In that microlithography stages frequently involve six or more measurement paths, and that BBO can cost more than $12,000, the additional crystals are a significant cost burden. An additional disadvantage of Lis' system is that it employs a low-speed (32-Hz) phase detection system based on the physical displacement of a PZT transducer.

It is clear from the foregoing, that the prior art does not provide a practical, high-speed, high-precision method and corresponding means for measuring and compensating fluctuations in the refractive index of air. The limitations in the prior art arise principally from the following, unresolved technical difficulties: (1) Prior-art heterodyne and super-heterodyne interferometers are limited in accuracy by fluctuations in the refractive index of air, (2) Prior-art dispersion techniques for measuring index fluctuations require extremely high accuracy in interference phase measurement, typically exceeding by an order of magnitude the typical accuracy of high-precision distance-measuring interferometers; (3) Obvious modifications to prior-art interferometers to improve phase-measuring accuracy would increase the measurement time to an extent incompatible with the rapidity of stage motion in modem microlithography equipment; (4) Prior-art dispersion techniques require at least two extremely stable laser sources, or a single source emitting multiple, phase-locked wavelengths; (5) Prior-art dispersion techniques in microlithography applications are sensitive to stage motion during the measurement, resulting in systematic errors; (6) Prior-art dispersion techniques that employ doubling crystals (e.g. U.S. Patent No.5,404,222 to Us) as part of the detection system are expensive and complicated.

These deficiencies in the prior art have led to the absence of any practical interferometric system for performing displacement measurement for microlithography in the presence of index fluctuations.

The invention is given with independent claims 1, 16. There is provided an apparatus for measuring fluctuations in the refractive index of a gas in a measurement path, the apparatus comprising: a source of at least two light beams having different wavelengths and a substantially harmonic relationship, the light beams each having orthogonal polarization states, means for introducing a frequency difference between the orthogonal polarization states of each of the light beams; means for aligning the light beams so that they pass through the same measurement path, optical means for producing phase shifted beams, the optical means comprising means for generating multiple passes over the measurement path for the light beams. The apparatus of the invention is characterized in that the number of passes for the respective light beams are harmonically related in a relationship which is substantially the same as the substantially harmonic relationship between the wavelengths, the phase shifts of the optically produced beams having a magnitude proportional to the product of the number of passes over the measurement path, of the physical length of the measurement path and the indices of refraction of the gas in the measurement path, and means for mixing the polarization components of each of the phase shifted beams for producing mixed output beams; means for producing heterodyne electrical signals from the intensities of the mixed output beams which comprise oscillations at heterodyne frequencies related to the frequency differences between the polarization states of the light beams and comprising heterodyne phases. The apparatus is also characterized by means for mixing at least two of the heterodyne electrical signals for producing at least one superheterodyne electrical signal comprising an amplitude modulated carrier having a superheterodyne modulation frequency substantially equal to half the difference of the two corresponding heterodyne frequencies and a superheterodyne modulation phase substantially equal to half the difference between the two corresponding heterodyne phases; and means for analyzing the superheterodyne modulation phase for determining the fluctuations in the refractive index over the measurement path. This apparatus (and the method defined below) are useful for distance measuring interferometry independent of the aforementioned fluctuations.

The method for measuring fluctuations in the refractive index of a gas in a measurement path comprising the step of providing source light beams having source wavelengths which are substantially harmonically related to each other. The method of the invention is characterized by passing the beams through a combination of multiple passes through the same measurement path, providing heterodyne phase shifts based on the source wavelengths, the number of passes comprising each multiple pass being similarly harmonically related to the harmonically related source wavelengths for providing a superheterodyne modulation phase substantially insensitive to motion along said measurement path.

The principal advantages of the invention may be summarized as follows. When the source wavelengths are substantially harmonically related and the phase shifts generated by multiple passes are similarly harmonically related, the present invention provides a superheterodyne modulation phase that is substantially insensitive to stage motion. The superheterodyne modulation phase is a direct measure of fluctuations in the refractive index of air. Since the superheterodyne modulation frequency may be adjusted to any convenient value, the phase-measurement accuracy for compensating index fluctuations may be appropriately enhanced. These improvements over the prior art are conveniently achieved without expensive optical components such as doubling crystals or the like, and without placing any restriction on the rapidity of stage motion.

An alternative embodiment of the invention includes the ability to compensate for unexpected fluctuations in the source wavelength, using additional monitor interferometer means and substantially the same electronic processing means as are employed in the primary apparatus. The monitor interferometer preferably comprises a fixed monitor path length having a carefully controlled refractive index, so that any measured variations in the monitor are attributable to and provide a measure of the wavelength stability.

**BRIEF DESCRIPTION OF THE DRAWINGS**

In the drawings, wherein like reference characters denote similar elements throughout the several views:

**Fig. 1** is a drawing showing a preferred embodiment of the invention;

**Fig. 2** is graph depicting a superheterodyne signal;

**Fig. 3** is a drawing showing a block diagram of the processing electronics;

**Fig. 4** is a drawing showing an alternative embodiment of the invention.

**DETAILED DESCRIPTION OF THE INVENTION**

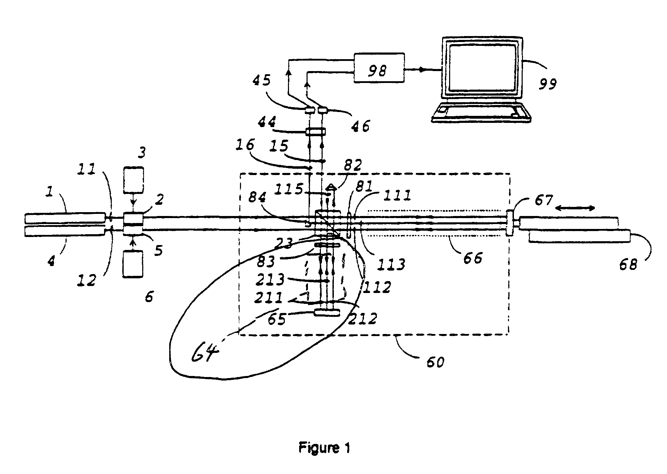

Referring to Figure 1, there is shown a preferred embodiment of the inventive apparatus of the present invention for measuring fluctuations in the refractive index of a gas in a measurement path 66. such as is useful for measuring the displacement of an object 67 independent of said fluctuations.

In accordance with a preferred method of the invention, in a first step, a light beam 11 emitted from a source 1 passes through a modulator 2 excited by a driver 3. Source 1 is preferably a laser or like source of coherent radiation, preferably polarized, and having a wavelength $\lambda_1$. Modulator 2 may for example be an acousto-optic device or a combination of an acousto-optic device with additional optics for selectively modulating polarization components of beam 11. Modulator 2 preferably shifts the oscillation frequency of one linear polarization component of beam 11 an amount $f_1$ with respect to an orthogonal linear polarization component, said polarization components being denoted herein as $x$ and $y$ direction components, respectively. Therefore, after passing through modulator 2, the $x$ polarization component of beam 11 has an oscillation frequency shifted upwards an amount $f_1$ with respect to the $y$ polarization component of beam 11.

In a next step, a light beam 12 emitted from a source 4 passes through a modulator 5 excited by a driver 6, similar to modulator 2 and driver 3, respectively. Source 4, similarly to source 1 , is preferably a laser or like source of polarized, coherent radiation, but preferably at a different wavelength, $\lambda_2$, having a known approximate harmonic relationship with respect to $\lambda_1$, i.e.

$$p_1\lambda_2 \approx p_2\lambda_1 \qquad for \qquad p_1, p_2 \approx 1, 2, 3, ... \; p_1 \neq p_2 \qquad\qquad (1.)$$

After passing through modulator 5, the *x* polarization component of beam 12 has an oscillation frequency shifted upwards an amount $f_2$ with respect to the *y* polarization component of beam 12.

It will be appreciated by those skilled in the art that beams 11 and 12 may be provided alternatively by a single laser source emitting more than one wavelength, or by a single laser source combined with optical frequency doubling means, or any equivalent source configuration capable of generating light beams of two or more wavelengths. It will also be appreciated by those skilled in the art that one or both of the frequency shifts $f_1, f_2$ may be the result of Zeeman splitting or like phenomena characteristic of the laser sources themselves.

In a next step, beams 11 and 12 propagate to an interferometer 60, comprised of optical means for a introducing a phase shift $\varphi_1$ between the *x* and *y* polarization components of beam 11 corresponding to wavelength $\lambda_1$ and a phase shift $\varphi_2$ between the *x* and *y* polarization components of beam 12 corresponding to wavelength $\lambda_2$. The magnitude of phase shifts $\varphi_1$, $\varphi_2$ are related to the round-trip physical length L of measurement path 66 according to the formulae

$$\varphi_j = (Lk_jn_j + \zeta_j)p_j, \qquad for \qquad j = 1, 2, \qquad (2.)$$

where the wavenumbers $k_1$ are given by

$$k_j = 2\pi/\lambda_j \qquad (3.)$$

and the indices of refraction $n_j$ of the gas in measurement path 66 correspond to wavelengths $\lambda_j$. The phase offsets $\zeta_j$ comprise all contributions to the phase shifts $\varphi_j$ that are not related to the measurement path 66. It is noteworthy that the coefficients $p_1$, $p_2$ are preferably identical to the like-denoted coefficients $p_1$, $p_2$ used to define the approximate harmonic relationship in Eq. (1). In Figure 1, interferometer 60 is configured so that $p_1 = 1$ and $p_2 = 2$, so as to illustrate in the simplest manner the function of the invention.

As shown and preferred in Figure 1, interferometer 60 is comprised of a reference mirror 65, a quarter-wave plate 81, a quarter-wave plate 83, a polarizing beam splitter 23 and object 67 connected to a motion stage 68, or the like, by which object 67 may be moved to alter measurement path 66. This configuration is known in the art as a polarized Michelson interferometer, and is shown as a simple illustration. An angle-compensating interferometer or similar device such as is described in an article entitled Differential interferometer arrangements for distance and angle measurements: Principles, advantages and applications," by C. Zanoni (VDI Berichte Nr. 749, p. 93, 1989), is preferably incorporated into the apparatus of the invention when working with stages commonly encountered in the micro-lithographic fabrication of integrated circuits. Other forms of interferometer known in the art as described in the above-cited article "Differential interferometer arrangements for distance and angle measurements: Principles, advantages and applications." by C. Zanoni (VDI Berichte Nr. 749, p.93, 1989), may be incorporated into the apparatus of the present invention of Figure 1 without significantly departing from the spirit and scope of the present invention.

An unusual and inventive characteristic of interferometer 60 is that beam 11 of wavelength $\lambda_1$ experiences a phase shift $\varphi_1$ proportional to the round-trip physical length *L* of measurement path 66 times the index of refraction $n_1$, whereas beam 12 of wavelength $\lambda_2$ experiences a phase shift $\varphi_2$ proportional to twice the round-trip physical length *L* of measurement path 66 times the index of refraction $n_2$. Beam 12, therefore, experiences a double pass through measurement path 66. Double-pass interferometers are known in the art as a means of improving measurement resolution, for example, as described in an article entitled "Double-passed two-beam interferometers" by P. Hariharan and D. Sen, J. Opt. Soc. Am. 50, 357-361 (1960); however, the inventive combination of a single-pass and double pass interferometer in the same system for the purpose of air-turbulence compensation is not known to the applicants and is taught herein for the first time in the art. Apparatus for achieving such an inventive combination are described in the following two paragraphs.

Referring to Figure 1, polarizing beam splitter 23 of interferometer 60 separates the two x and *y* polarization components of beams 11 and 12. Polarizing beam splitter 23 preferably reflects the *x* polarization components while transmitting the *y* polarization components. Therefore, *x* polarization component of beam 11 is directed as a beam 211 through quarter-wave plate 83, which converts the polarization state of beam 211 to circular. After reflection from reference mirror 65, quarter-wave plate 83 converts the polarization state of beam 211 back to linear, but the direction of polarization is now along the *y* direction. At substantially the same time, the y polarization component of beam 11 is directed as a beam 111 through quarter-wave plate 81, which converts the polarization state of beam 111 to circular. After passing through measurement path 66 and reflecting from object 67, quarter-wave plate 81 converts the polarization state of beam 111 back to linear, but the direction of polarization is now along the x direction. Since beam 111 with the *x* polarization component is reflected and beam 211 with the *y* polarization component is transmitted by beam 23, both beams 111 and 211 combine to form a phase-shifted beam 15, which exits interferometer 60 as shown in Figure 1

Referring still to Figure 1, the *x* polarization component of beam 12 is directed as a beam 212 through quarter-wave plate 83, which converts the polarization state of beam 212 to circular. After reflection from reference mirror 65, quarter-wave plate 83 converts the polarization state of beam 212 back to linear, but the direction of polarization is now along the *y* direction. At substantially the same time, the *y* polarization component of beam 12 is directed as a beam 112 through quarter-wave plate 81, which converts the polarization state of beam 112 to circular. After passing through measurement path 66 and reflecting from object 67, quarter-wave plate 81 converts the polarization state of beam 112 back to linear, but the direction of polarization is now along the *x* direction. Since beam 112 with the *x* polarization component is reflected and beam 212 with the *y* polarization component is transmitted by beam splitter 23, both beams 112 and 212 combine to form a beam 115, which propagates to folding prism 82, which redirects beam 115 back to polarizing beam splitter 23. Polarizing beam splitter 23 once again separates the polarization components of beam 115, this time creating a beam 113 having an *x* polarization state and a beam 213 having a *y* polarization state After passing twice through quarter-wave plate 83 and reflecting once from reference mirror 65, beam 213 is converted back to *x* polarization. Similarly, after passing twice through quarter-wave plate 81 and reflecting once from object 67, beam 113 is converted back to *y* polarization. Since beam 213 with the *x* polarization component is reflected and beam 113 with the y polarization component is transmitted by beam splitter 23 both beams 213 and 113 combine to form a phase-shifted beam 16, which exits interferometer 60 as shown in Figure 1 after reflection from fold mirror 84.

In a next step, phase-shifted beams 15 and 16 shown in Figure 1 pass through a polarizer 44 preferably oriented so as to mix the *x* and *y* polarization components of each of beams 15 and 16. Beams 15,16 then impinge upon a photodetector 46 and a photodetector 45 respectively, resulting in two heterodyne interference signals $s_1$, $s_2$ corresponding to the two wavelengths $\lambda_1$, $\lambda_2$, respectively and having the form

$$s_j = \cos[\alpha_j(t)], \qquad \text{for} \qquad j=1,2, \tag{4.}$$

where the time-dependent arguments $\alpha_1(t), \alpha_2(t)$ of heterodyne interference signals $s_1$, $s_2$ are given by

$$\alpha_j(t) = 2\pi f_j t + \varphi_j \tag{5.}$$

and the signal amplitude has been normalized to one and any constant offset values have been filtered out by electronic pre-processing means (not shown). Heterodyne interference signals $s_1$, $s_2$ are transmitted to electronic processing means 98 for analysis.

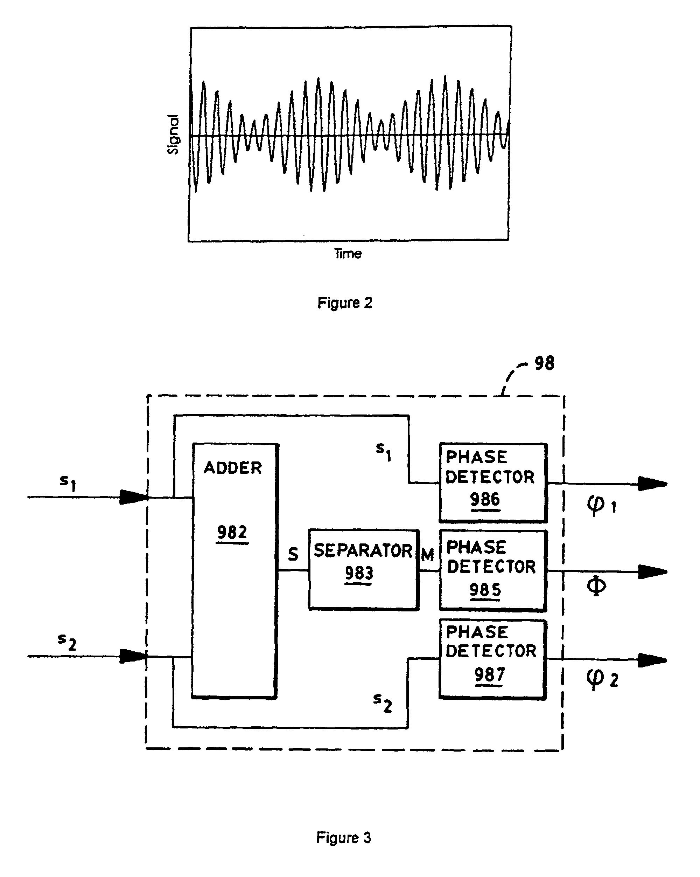

Referring now to Figure 3, electronic processing means 98 preferably comprises means 982 for electronically adding the two heterodyne signals $s_1$, $s_2$ together to create a superheterodyne signal *S* having the mathematical form

$$S = s_1 + s_2 \tag{6.}$$

which may be rewritten as

$$S = 2MC \tag{7.}$$

where

$$C = \cos(2\pi \upsilon t + \theta) \tag{8.}$$

$$M = cos(2\pi Ft + \Phi) \qquad (9.)$$

and

$$\upsilon = \tfrac{1}{2}(f_1 + f_2) \qquad (10.)$$

$$\theta = \tfrac{1}{2}(\varphi_1 + \varphi_2) \qquad$$

$$F = \tfrac{1}{2}(f_1 - f_2) \qquad (11.)$$

$$\Phi = \tfrac{1}{2}(\varphi_1 - \varphi_2) \qquad$$

Superheterodyne signal $S$ is therefore a carrier signal $C$ of frequency V modulated by an envelope signal M of frequency $F$. Those skilled in the art will appreciate that when heterodyne signals $s_1$, $s_2$ are of different amplitude, the resulting mathematical expression is more complicated, but nonetheless may be described in terms of a carrier signal modulated by an envelope signal. For simplicity in the present disclosure, it is assumed that modified heterodyne signals $s_1$, $s_2$ have the same amplitude.

Referring once again to Figure 3, electronic processing means 98 preferably comprises a means 983 to separate envelope signal $M$ from carrier signal $C$, using rectification and filtering, signal squaring, or any of the like techniques for extracting an amplitude modulation and demodulating a carrier. Electronic processing means 98 further comprises a means 985 to determine the modulation phase $\Phi$ using time-based phase detection or the like. Electronic processing means 98 additionally comprises a means 986 and a means 987 to determine the phases $\varphi_1$ and $\varphi_2$, respectively.

In a next step, electronic processing means 98 transmits to a computer 99, in either digital or analog format, the values of modulation phase $\Phi$ and phase shifts $\varphi_1$, $\varphi_2$. Computer 99 calculates the carrier phase $\vartheta$ and calculates the refractive index using the formula

$$n_1 = 1 + \frac{A}{L}(K\vartheta - \chi\Phi - Q). \qquad (12.)$$

where

$$A = \frac{2\Gamma}{(\chi^2 - K^2)}, \qquad (13.)$$

$$K = \frac{1}{2}(p_1 k_1 - p_2 k_2) \qquad (14.)$$

$$\chi = \frac{1}{2}(p_1 k_1 + p_2 k_2) \qquad (15.)$$

$$\Gamma = \frac{n_1 - 1}{n_2 - n_1} \qquad (16.)$$

Constant $\Gamma$, defined above, is a measure of the dispersion of the refractive index of air. For example, if $\lambda_1 = 0.63\mu m$ and $\lambda_2 = 0.33\mu m$, then $\Gamma = 24$. The offset factor $Q$ is defined as

$$Q = K\xi - \chi Z, \qquad (17.)$$

where

$$\xi = \frac{1}{2}(p_1\zeta_1 + p_2\zeta_2) \tag{18.}$$

$$Z = \frac{1}{2}(p_1\zeta_1 - p_2\zeta_2) \tag{19.}$$

For the presently-preferred embodiment of the invention, $Q$ is considered a constant, or is monitored by purely electronic means (not shown).

The quantities $K$ and $\chi$ introduced in Eqs.(14, 15). respectively will be referred to as the vacuum superheterodyne wavenumber and the vacuum carrier wavenumber, respectivety. This terminology follows logically from the following two phase equations, which are valid when $n_1 = n_2 = 1$:

$$\vartheta = \chi L + \xi \tag{20.}$$

$$\Phi = KL + Z \tag{21.}$$

For the same reason, the quantities $\xi$ and $Z$ introduced in Eqs. (18, 19) will be referred to as the vacuum carrier phase offset and the vacuum superheterodyne phase offset, respectively.

In a final step, for those applications related to distance measuring interferometry, the calculated value of refractive index $n_1$ together with the phase shift $\varphi_1$ may be used to determine the distance $L$ independent of fluctuations in refractive index $n_1$, using the formula

$$L = (\varphi_1 - \zeta_1)/p_1 k_1 n_1 \tag{22}$$

It would also be obvious to someone skilled in the art to perform similar calculations with respect to $n_2$ in place of or in addition to $n_1$.

A preferred embodiment of the present invention having been disclosed in the previous paragraphs, the underlying advantages of the present invention will be made more clear by the following discussion. It is evident from the calculation of the refractive index $n_1$ provided by the above equation that the required accuracies of the carrier phase $\theta$ and the superheterodyne phase $\Phi$ are related to the values of the carrier wavenumber $\chi$ and the superheterodyne wavenumber $K$. In that the frequency $F$ of the modulation signal $M$ can be very much smaller than the frequency $\upsilon$ of carrier signal $C$. and since it is generally easier to calculate the phase with high resolution of an electronic signal of lower frequency, it is generally most advantageous to rely on a high-accuracy measurement of the superheterodyne modulation phase $\Phi$. This is readily achieved in the apparatus of the present invention when the wavelengths $\lambda_1$, $\lambda_2$ are approximately harmonically related, as shown in Eq.(1). For the limit case where $\lambda_1$, $\lambda_2$ are integer multiples of each other, i.e. for the limit case where

$$p_1\lambda_2 = p_2\lambda_1 \qquad \text{for} \qquad p_1, p_2 =\ _{1,2,3} \quad p_1 \neq p_2 \tag{23.}$$

the vacuum superheterodyne wavenumber $K$ is equal to zero and the refractive index calculation does not involve the carrier phase $\vartheta$ at all:

$$n_1 = 1 + \frac{A}{L}(\chi\Phi - Z) \qquad \text{for} \qquad K=0. \tag{24.}$$

Further, for the case where $K=0$, the superheterodyne modulation phase $\Phi$ is also only weakly dependent upon the distance $L$, relative to the very strong dependence of the carrier phase $\vartheta$ and of the phase shifts $\varphi_1$, $\varphi_2$. This greatly improves the phase detection accuracy for moving objects, such as are commonly encountered in microlithography equipment.

An important consideration for interferometry in general and for dispersion techniques in particular is source wavelength instability. The inventive apparatus and means provides a convenient way of compensating for source wavelength instability as follows. By mathematical manipulation of Eq.(12), it is possible to show that an error $\delta n_1$ in refractive index attributable to source wavelength instability is given by

$$\delta n_1 = \chi \; A \; \delta K, \qquad\qquad (25.)$$

where $\delta K$ is the instability in the vacuum superheterodyne wavenumber $K$. This formula shows that the magnitude of the error is substantially independent of the object distance $L$, and of all other variables such as the phase shifts $\varphi_1$, $\varphi_2$ that depend directly on the object distance $L$. It is therefore possible to compensate for the effects of wavelength stability by measuring the index of refraction along a monitor path that is entirely free of real fluctuations in index. Any measured variations are the result of wavelength instability.

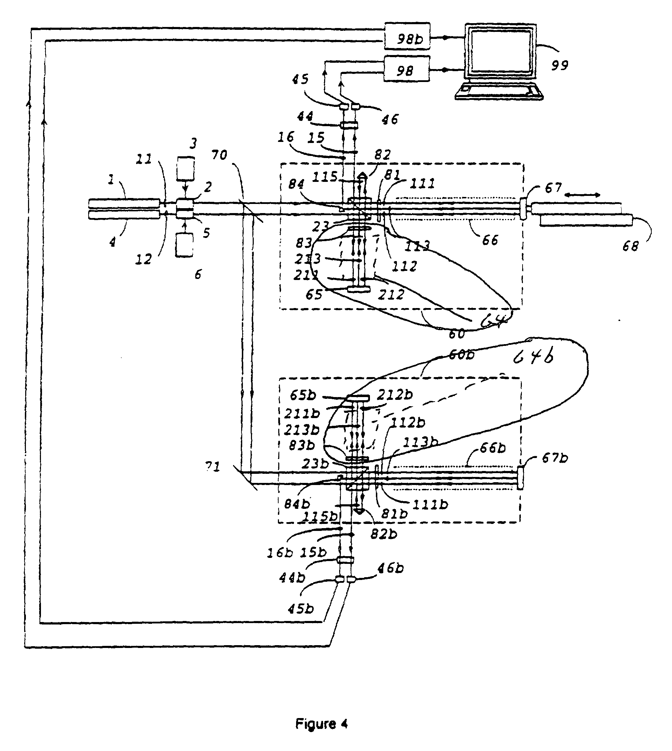

Referring now to Figure 4, there is shown an alternative embodiment of the present invention in which a monitor system 60b has been added to the embodiment of Figure 1 for the purpose of compensating for an error $\delta n_1$ in refractive index measurement attributable to source wavelength instability. A beam splitter 70 and a mirror 71 reflect a portion of beams 11 and 12 towards monitor system 60b. Monitor system 60b comprises a number of elements performing analogous operations as interferometer 60, with elements performing like operations as like denoted elements as interferometer 60, apart from the suffix "b" when referring to elements of monitor system 60b. A monitor electronic processing system 98b similarly performs like operations as electronic processing system 98. The difference between interferometer 60 and monitor system 60b is that monitor path 66b of monitor system 60b is preferably a fixed length, with a carefully controlled refractive index, such as may be achieved by enclosing monitor path 66b and controlling the temperature and pressure of the enclosed volume. In that the refractive index along monitor path 86b is substantially constant, any measured variations $\delta n_M$ in the monitor system are attributable to source wavelength instability. For this alternative embodiment of the present invention, computer 99 preferably calculates refractive index $n_1$ according to the formula

$$n_1 = 1 + (A/L)(K\upsilon - \chi\Phi - Q) - \delta n_M \qquad (26.)$$

This inventive compensation technique greatly reduces the wavelength stability requirements for the source. It is particularly noteworthy that the present invention does not require absolute wavelength stability, and a monitor path 66b need not have an extraordinarily stable physical length $L$.

The advantages of the present invention are: (1) the present invention provides accurate measurement of and compensation for fluctuations in the refractive index of air, such as is useful for distance measuring interferometry; (2) the present invention is compatible with the rapid stage motion common to modem microlithography equipment; (3) the present invention optionally comprises easily-incorporated monitor means and method to substantially reduce source stability requirements; and (4) the apparatus of the present invention is substantially less complicated and expensive relative to comparable prior art.

It will be appreciated by those skilled in the art that additional optical elements and electronic processing steps may be incorporated into one of the disclosed embodiments of the inventive apparatus. For example, additional detectors and associated elements may be added to the embodiments to measure and compensate for the various phase offsets encountered in the data processing.

## Claims

1.  An apparatus for measuring the effects of the refractive index of a gas in a measurement path comprising:

> a source (1, 4) of at least two light beams (11, 12) having different wavelengths;
> an interferometer (60) having first (64) and second (66) measurement legs having optical paths structured and arranged such that at least one leg (66) has a variable physical length and at least one leg (66) is at least in part occupied by the gas, and one leg (64) may at least in part be occupied by a predetermined medium, the optical path length difference between the first (64) and second (66) measurement legs varying in accordance with the difference between the respective physical length of their optical paths and the properties of the gas and the predetermined medium;
> introduction means arranged to introduce first and second predetermined portions of each of the light beams (11, 12) into the first (64) and second (66) measurement legs respectively, said first and second predetermined portions emerging from the interferometer (60) as exit beams (15, 16) containing information about the respective optical path lengths through the first (64) and second (66) measurement legs at the wavelengths of the original beams (11, 12);

mixing means (44) arranged to combine the exit beams (15, 16) to produce mixed optical signals containing information corresponding to the phase differences between the exit beams (15, 16),

**characterized in that** beams at one of the wavelengths of the first and second predetermined portions travel through at least one of the first (64) and second (66) measurement legs along predetermined optical paths a different number of passes than beams of the other of the wavelengths of the first and second predetermined portions to compensate for the relative rates at which the physical path lengths of the first (64) and second (66) measurement legs are changing,

detecting means (45, 46) are arranged to detect the mixed optical signals and generate electrical interference signals ($s_1$, $s_2$) containing information corresponding to the effects of the indices of refraction of the gas and the predetermined medium at the differing wavelengths and the relative physical path lengths of the first (64) and second (66) measurement legs and their relative rates of change; and

electronic means (98) are arranged to analyze the electrical interference signals ($s_1$, $s_2$) to determine the effects of the gas in the measurement legs (64, 66).

2. An apparatus according to claim 1 **characterized in that** the wavelengths of the light beams (11, 12) have a substantially harmonic relationship, and that the beams (11, 12) each have orthogonal polarization states, and the number of passes for the respective light beams (11, 12, 111, 112) are harmonically related in a relationship which is substantially the same as the substantially harmonic relationship between the wavelengths of the beams (11, 12), and further **characterized in that** the introduction means comprises means (2, 5) for introducing a frequency difference between the orthogonal polarization states of each of the light beams (11, 12), means for aligning the light beams (11, 12) so that they pass along the same measurement path (66), and optical means for generating multiple passes of the light beams (11, 12, 111, 112) over the measurement leg (66) occupied at least in part by the gas, the phase shifts of the exit beams (15, 16) having a magnitude proportional to the number of passes over this measurement leg (66), the physical length of this measurement leg (66) and the indices of refraction of the gas in this measurement leg (66).

3. An apparatus according to claim 2 **characterized in that** the mixing means (44) mixes the polarization components of each of the exit beams (15, 16) to produce mixed output beams, and further **characterized in that** the detecting means (45, 46) produces heterodyne electrical signals ($s_1$, $s_2$) from the intensities of the mixed output beams, which signals comprise oscillations at heterodyne frequencies related to the frequency differences between the polarization states of the light beams and comprising heterodyne phases.

4. An apparatus according to claim 3 **characterized by** means (982) for mixing at least two of the heterodyne electrical signals ($s_1$, $s_2$) for producing at least one superheterodyne electrical signal (S) comprising an amplitude modulated carrier (C) having a superheterodyne modulation frequency (F) substantially equal to half the difference of the two corresponding heterodyne frequencies and a superheterodyne modulation phase substantially equal to half the difference between the two corresponding heterodyne phases; and means (983, 985, 986, 987) for analyzing the superheterodyne modulation phase for determining the fluctuations in the refractive index over the measurement leg (66).

5. An apparatus according to claim 4 **characterized in that** the light beams (11, 12) each have two orthogonal polarization states, the frequency difference introducing means (2, 5) comprising means for introducing the frequency difference between the two orthogonal polarization states of each of the light beams, this frequency difference being different for the at least two beams.

6. An apparatus according to claim 4 or 5 **characterized in that** the means for aligning the light beams comprises optical means for aligning all of the light beams so that they pass through the same measurement path (66).

7. An apparatus according to any one of claims 4 to 6 **characterized in that** the optical means for producing the exit beams (15, 16) comprises optical means for introducing phase shifts between the polarization states of each of the light beams.

8. An apparatus according to any one of the preceding claims **characterized in that** the means (982)for mixing at least two of the heterodyne electrical signals ($s_1$, $s_2$) comprises means for mixing any two of said heterodyne electrical signals ($s_1$, $s_2$)for producing said at least one superheterodyne electrical signal (S) comprising the amplitude modulated carrier (C) having the superheterodyne modulation frequency (F).

9. An apparatus according to any one of the preceding claims **characterized in that** the source (1, 4) comprises a source of coherent radiation.

10. An apparatus according to any one of claims 4 to 7 **characterized in that** the means (982) for mixing the heterodyne signals is electronic.

11. An apparatus according to any one of the preceding claims **characterized in that** the optical means for producing the exit beams (15, 16) comprises a multiple pass interferometer.

12. An apparatus according to any one of claims 4 to 7 and 10 **characterized by** means (60b) for compensating for errors in the superheterodyne modulation phase produced by fluctuations in the wavelengths of the source (1, 4).

13. An apparatus according to claim 12 **characterized in that** the compensating means (60b) comprises an interferometer having a measurement path comprised of a monitor path (66b) of fixed length and a gas having a controlled refractive index.

14. An apparatus according to claim 12 or 13 **characterized in that** the compensation means (60b) further comprises means (45b, 46b) for producing monitor heterodyne signals.

15. An apparatus according to any one of claims 12 to 14 **characterized in that** the compensation means (60b) further comprises means (98b) for mixing any two of the monitor heterodyne electrical signals for producing at least one monitor superheterodyne electrical signal comprising an amplitude modulated carrier having monitor superheterodyne modulation frequency.

16. A method for measuring the effects of the refractive index of a gas in a measurement path comprising:

providing light beams (11, 12) having differing wavelengths,
providing an interferometer (60) having first (64) and second (66) measurement legs having optical paths structured and arranged such that at least one leg (66) has a variable physical length and at least one leg (66) is at least in part occupied by the gas and the other (64) leg may at least in part be occupied by a predetermined medium, the optical path length difference between the first (64) and second (66) measurement legs varying in accordance with the respective physical lengths of their optical paths and the properties of the gas and the predetermined medium;
introducing first and second predetermined portions of each of the light beams (11, 12) into the first (64) and second (66) measurement legs so that the first and second predetermined portions emerge from the interferometer (60) as exit beams (15, 16) containing information about the respective optical path lengths through the first (64) and second (66) measurements legs at the wavelengths of the original beams (11, 12);
combining the exit beams (15, 16) to produce mixed optical signals containing information corresponding to the phase differences between the exit beams (15, 16),

**characterized by** beams at one of the wavelengths of the first and second predetermined portions travel through at least one of the first (64) and second (66) measurement legs along predetermined optical paths a different number of passes than beams of the other of the wavelengths of the first and second predetermined portions to compensate for the relative rates at which the physical path lengths of the first (64) and second (66) measurement legs are changing,
by detecting the mixed optical signals and generating electrical interference signals ($s_1$, $s_2$) containing information corresponding to the effects of the indices of refraction of the gas and the predetermined medium at the differing wavelengths and the relative physical path lengths of the first (64) and second (66) measurement legs and their relative rates of change, and
electronically analyzing the electrical interference signals ($s_1$, $s_2$) to determine the effects of the gas in the measurement legs (64, 66).

17. A method according to claim 16 **characterized in that** the light beams (11, 12) have wavelengths having a substantially harmonic relationship, and further **characterized by** providing heterodyne phase shifts based on the source wavelengths, the number of passes comprising each multiple pass being similarly harmonically related to the harmonically related wavelengths for providing a superheterodyne modulation phase substantially insensitive to motion along the measurement leg (66) at least part of which is occupied by the gas.

18. A method according to claim 17 **characterized in that** the measurement leg (66) at least part of which is occupied by the gas comprises a measurement leg in a multiple pass interferometer (60) having a stage (67) movable along the measurement leg (66), the superheterodyne modulation phase providing step comprising providing the super-heterodyne modulation phase substantially insensitive to stage motion in the measurement leg (66).

19. A method according to claim 17 or 18 **characterized by** determining a distance *L* along the measurement leg (66) independent of the fluctuations in the refractive index n.

20. A method according to claim 19 **characterized in that** the distance determining step determines the distance L in accordance with the equation

$$L = (\varphi_1 - p_1 \, \zeta_1)/p_1 k_1 n_1$$

where $\varphi_1$ equals the magnitude of the phase shift, $k_1$ equals the wavenumber of the phase shift, *n,* equals the refractive index and $\zeta_1$ equals the phase offset, the phase offset comprising all contributions to the phase shift $\varphi_1$ that are not related to the measurement path.

21. A method according to any one of claims 17 to 20 **characterized in that** each of the light beams (11, 12) have orthogonal states and the step of providing the heterodyne phase shifts comprises optically producing phase shifted beams (15, 16) by introducing phase shifts between the polarization states of each of the light beams having phase shift magnitude proportional to the number of passes through the measurement leg (66), inversely proportional to the wavelength of the optical beam, proportional to the physical length of the measurement leg (66), and proportional to the indices of refraction of the gas in the measurement leg (66).

22. A method according to any one of claims 17 to 21 **characterized by** compensating for errors in the superheterodyne modulation phase produced by fluctuations in the source wavelengths.

**Patentansprüche**

1. Vorrichtung zum Messen des Einflusses des Brechungsindexes eines Gases in einer Meßstrecke, mit:

einer Lichtquelle (1, 4) für mindestens zwei Lichtstrahlen (11, 12) unterschiedlicher Wellenlängen;
einem Interferometer (60) aufweisend erste (64) und zweite (66) Meßschenkel, deren Lichtwege derart verlaufen, dass mindestens ein Schenkel (66) eine geometrisch variable Länge aufweist und mindestens ein Schenkel (66) mindestens teilweise vom Gas umgeben ist, während ein Schenkel (64) mindestens teilweise von einem vorbestimmten Medium umgeben sein kann, wobei der Lichtweg-Längenunterschied zwischen dem ersten (64) und dem zweiten (66) Meßschenkel in Abhängigkeit des physischen Längenunterschieds zwischen den Lichtwegen sowie der Eigenschaften des Gases und des vorbestimmten Mediums variiert;
Einfügemitteln zum Einblenden erster und zweiter vorgegebener Anteile jedes der Lichtstrahlen (11, 12) in den ersten (64) bzw. zweiten (66) Meßschenkel, so dass die vorgegebenen ersten und zweiten Anteile unter Beinhaltung von Informationen über die jeweiligen Lichtweglängen durch den ersten (64) bzw. zweiten (66) Meßschenkel mit den Wellenlängen der ursprünglichen Strahlen (11, 12) als Ausgangsstrahlen (15, 16) aus dem Interferometer (60) austreten;
Mischmitteln (44) zum Kombinieren der Ausgangsstrahlen (15, 16) zur Erzeugung optischer Mischsignale mit den der Phasendifferenz zwischen den Ausgangsstrahlen (15, 16) entsprechenden Informationen,

**dadurch gekennzeichnet, dass** zum Ausgleich der relativen zeitlichen Änderung der geometrischen Lichtwege der ersten (64) und zweiten (66) Meßschenkel Strahlen einer der Wellenlängen der ersten und zweiten vorgegebenen Anteile vorbestimmten Lichtwegen entlang durch mindestens einen der ersten (64) und zweiten (66) Meßschenkel mit einer sich von den Durchgängen der Strahlen der jeweils anderen Wellenlängen der ersten und zweiten vorgegebenen Anteile unterscheidenden Anzahl von Durchgängen geführt werden,
dass Erfassungsmittel (45, 46) vorgesehen sind zur Erkennung der optischen Mischsignale und Erzeugung elektrischer Interferenzsignale ($s_1$, $s_2$) mit Informationen über den Einfluss der Brechungsindizen des Gases und des vorbestimmten Mediums bei den verschiedenen Wellenlängen und relativen Streckenlängen der ersten (64) und zweiten (66) Meßschenkel sowie deren relativen zeitlichen Änderung; und

und dass elektronische Mittel (98) zur Auswertung der elektrischen Interferenzsignale ($s_1$,$s_2$) und Bestimmung des Einflusses des Gases in den Meßschenkeln (64, 66) vorgesehen sind.

2. Vorrichtung nach Anspruch 1, **dadurch gekennzeichnet, dass** die Lichtstrahlen (11, 12) Wellenlängen wesentlicher harmonischer Beziehung und diese Strahlen (11, 12) jeweils orthogonale Polarisationszustände aufweisen, dass die Anzahl der Durchgänge der jeweiligen Lichtstrahlen (11, 12, 111, 112) in einem weitgehend der wesentlichen harmonischen Beziehung zwischen den Wellenlängen der Strahlen (11, 12) entsprechenden wesentlichen harmonischen Verhältnis steht, und dass die Einfügemittel Mittel (2, 5) zur Erzeugung einer Frequenzdifferenz zwischen den orthogonalen Polarisationszuständen der einzelnen Lichtstrahlen (11, 12), Mittel zum Bündeln der Lichtstrahlen (11, 12) in einen gemeinsamen Meßschenkel (66) sowie optische Mittel zur Erzeugung mehrfacher Durchgänge der Lichtstrahlen (11, 12, 111, 112) durch den mindestens teilweise vom Gas umgebenen Meßschenkel (66) umschließen, wobei die Phasenänderungen der Ausgangsstrahlen (15, 16) größenmäßig proportional der Anzahl der Durchgänge durch den besagten Meßschenkel (66), der geometrischen Länge dieses Meßschenkels (66) und den Brechungsindizen des Gases in diesem Meßschenkel (66) entsprechen.

3. Vorrichtung nach Anspruch 2, **dadurch gekennzeichnet, dass** die Mischmittel (44) durch Mischen der Polarisationskomponenten jedes der Ausgangsstrahlen (15, 16) zur Erzeugung gemischter Ausgangsstrahlen dienen, und dass die Erfassungsmittel (45, 46) aus den Intensitäten der gemischten Ausgangsstrahlen elektrische Überlagerungssignale ($s_1$, $s_2$) erzeugen, die den Frequenzdifferenzen zwischen den Polarisationszuständen der Lichtstrahlen entsprechende, überlagerte Phasen aufweisende Schwingungen überlagerter Frequenzen enthalten.

4. Vorrichtung nach Anspruch 3, **gekennzeichnet durch** Mittel (982) zum Mischen von mindestens zwei der überlagerten elektrischen Signale ($s_1$, $s_2$) zur Erzeugung mindestens eines elektrischen Überlagerungssignals ($S$) mit einem amplitudenmodulierten Trägersignal ($C$) einer Überlagerungs-Modulationsfrequenz ($F$) , die im wesentlichen der halben Differenz der betreffenden beiden Überlagerungsfrequenzen entspricht, sowie mit einer Überlagerungs-Modulationsphase, die im wesentlichen der halben Differenz zwischen den beiden Überlagerungsphasen gleich ist; sowie Mittel (983, 985, 986, 987) zur Auswertung der Überlagerungs-Modulationsphase und Bestimmung der Schwankungen des Brechungsindexes entlang des Meßschenkels (66).

5. Vorrichtung nach Anspruch 4, **dadurch gekennzeichnet, dass** jeder der Lichtstrahlen (11, 12) zwei orthogonale Polarisationszustände aufweist, wobei die die Frequenzdifferenz erzeugenden Mittel (2, 5) weitere Mittel zum Einfügen der Frequenzdifferenz zwischen die beiden orthogonalen Polarisationszustände jedes der Lichtstrahlen enthalten und diese Frequenzdifferenz für die mindestens zwei Strahlen unterschiedlich ist.

6. Vorrichtung nach Anspruch 4 oder 5, **dadurch gekennzeichnet, dass** die Mittel zum Ausrichten der Lichtstrahlen optische Mittel zum Bündeln aller Lichtstrahlen zum Durchgang durch den gemeinsamen Messweg (66) umfassen.

7. Vorrichtung nach einem der Ansprüche 4 bis 6, **dadurch gekennzeichnet, dass** die optischen Mittel zur Erzeugung der Ausgangsstrahlen (15, 16) weitere optische Mittel zur Phasenänderung zwischen den Polarisationszuständen jedes der Lichtstrahlen umfassen.

8. Vorrichtung nach einem der vorhergehenden Ansprüche, **dadurch gekennzeichnet, dass** die Mittel (982) zum Mischen von mindestens zwei der überlagerten elektrischen Signale ($s_1$, $s_2$) weitere Mittel zum Mischen jeglicher zwei der besagten überlagerten elektrischen Signale ($s_1$, $s_2$) zur Erzeugung des besagten mindestens einen elektrischen Überlagerungssignals ($S$) mit dem amplituden-modulierten Träger ($C$) der überlagerten Modulationsfrequenz (F) umfassen.

9. Vorrichtung nach einem der vorgehenden Ansprüche, **dadurch gekennzeichnet, dass** die Lichtquelle (1, 4) eine Quelle kohärenter Strahlung enthält.

10. Vorrichtung nach einem der Ansprüche 4 bis 7, **dadurch gekennzeichnet, dass** die Mittel (982) zum Mischen der überlagerten Signale elektronischer Art sind.

11. Vorrichtung nach einem der vorhergehenden Ansprüche, **dadurch gekennzeichnet, dass** die optischen Mittel zur Erzeugung der Ausgangsstrahlen (15, 16) ein Mehrfachdurchgangs-Interferometer umfassen.

12. Vorrichtung nach einem der Ansprüche 4 bis 7 sowie 10, **gekennzeichnet durch** Mittel (60b) zum Ausgleich von auf Wellenlängenschwankungen der Lichtquelle (1, 4) beruhenden Fehlern der Überlagerungs-Modulationsphase.

13. Vorrichtung nach Anspruch 12, **dadurch gekennzeichnet, dass** die Ausgleichsmittel (60b) ein Interferometer umfassen, dessen Meßstrecke einen Kontrollpfad (66b) fester Länge und ein Gas geregelten Brechungsindexes einbeschließt.

14. Vorrichtung nach Anspruch 12 oder 13, **dadurch gekennzeichnet, dass** die Ausgleichsmittel (60b) weitere Mittel (45b, 46b) zur Erzeugung überlagerter Kontrollsignale umfassen.

15. Vorrichtung nach einem der Ansprüche 12 bis 14, **dadurch gekennzeichnet, dass** die Ausgleichsmittel (60b) weitere Mittel (98b) zum Mischen jeglicher zwei elektrischer Überlagerungskontrollsignale zur Erzeugung mindestens eines elektrischen, einen amplitudenmodulierten Träger mit einer Überlagerungsmodulations-Kontrollfrequenz aufweisenden Überlagerungskontrollsignals umfassen.

16. Verfahren zum Messen des Einflusses des Brechungsindexes eines Gases in einer Meßtrecke, unter:

Bereitstellung von Lichtstrahlen (11, 12) unterschiedlicher Wellenlängen;
Bereitstellung eines Interferometers (60) aufweisend erste (64) und zweite (66) Meßschenkel, deren Lichtwege derart verlaufen, dass mindestens ein Schenkel (66) eine geometrisch variable Länge aufweist und mindestens ein Schenkel (66) mindestens teilweise vom Gas umgeben ist und der andere Schenkel (64) mindestens teilweise von einem vorbestimmten Medium umgeben sein kann, wobei der Lichtweg-Längenunterschied zwischen dem ersten (64) und zweiten (66) Meßschenkel in Abhängigkeit vom physischen Längenunterschied zwischen den Lichtwegen sowie der Eigenschaften des Gases und des vorbestimmten Mediums variiert;
Einfügen erster und zweiter vorgegebener Anteile jedes der Lichtstrahlen (11, 12) in den ersten (64) bzw. zweiten (66) Meßschenkel, so dass die ersten und zweiten vorgegebenen Anteile unter Beinhaltung von Informationen über die jeweiligen Lichtweglängen durch den ersten (64) bzw. zweiten (66) Meßschenkel mit den Wellenlängen der ursprünglichen Strahlen (11, 12) als Ausgangsstrahlen (15, 16) aus dem Interferometer (60) austreten;
Zusammenlegung der Ausgangsstrahlen (15, 16) zur Erzeugung optischer Mischsignale mit den der Phasendifferenz zwischen den Ausgangsstrahlen (15, 16) entsprechenden Informationen,

**gekennzeichnet durch** Strahlen einer der Wellenlängen der ersten und zweiten vorgegebenen Anteile, die zum Ausgleich der relativen zeitlichen Änderung der geometrischen Lichtwege der ersten (64) und zweiten (66) Meßschenkel vorbestimmten Lichtwegen entlang **durch** mindestens einen der ersten (64) und zweiten (66) Meßschenkel mit einer sich von den Durchgängen der Strahlen der jeweils anderen Wellenlängen der ersten und zweiten vorgegebenen Anteile unterscheidenden Anzahl von Durchgängen geführt werden,
Erfassung der optischen Mischsignale und Erzeugung elektrischer Interferenzsignale ($s_1$, $s_2$) mit Informationen über den Einfluss der Brechungsindizen des Gases und des vorbestimmten Mediums bei den verschiedenen Wellenlängen und relativen Streckenlängen der ersten (64) und zweiten (66) Meßschenkel sowie deren relativen zeitlichen Änderung; und
elektronischer Auswertung der elektrischen Interferenzsignale ($s_1$, $s_2$) zur Ermittlung des Gaseinflusses in den Meßschenkeln (64, 66).

17. Verfahren nach Anspruch 16, **gekennzeichnet durch** Lichtstrahlen (11, 12), deren Wellenlängen eine im wesentlichen harmonische Beziehung aufweisen, sowie **durch** die Erzeugung überlagerter Phasenänderungen auf Grundlage der Lichtquellenwellenlängen, wobei die Anzahl der Strahlendurchgänge bei jedem Mehrfachdurchgang jeweils in einem ähnlichen Oberwellenverhältnis zu den harmonisch bezogenen Wellenlängen steht, um eine weitgehend auf Bewegungen im mindestens teilweise vom Gas umgebenen Meßschenkel (66) unempfindliche überlagerte Modulationsphase zu erzeugen.

18. Verfahren nach Anspruch 17, **dadurch gekennzeichnet, dass** der mindestens teilweise vom Gas umgebene Meßschenkel (66) eine Meßstrecke in einem Mehrfachdurchgangs-Interferometer (60) mit einer entlang dem Meßschenkel (66) verfahrbaren Bühne (67) umfasst, wobei aufgrund einer die überlagerte Modulationsphase erzeugenden Maßnahme die Überlagerungsmodulationsphase im wesentlichen gegen eine Bewegung der Bühne (67) im Messweg (66) unempfindlich ist.

19. Verfahren nach Anspruch 17 oder 18, **gekennzeichnet durch** die Bestimmung einer Weglänge $L$ entlang dem Meßschenkel (66) unabhängig von Schwankungen des Brechungsindexes $n$.

**20.** Verfahren nach Anspruch 19, **dadurch gekennzeichnet, dass** die Ermittlung der Weglänge L gemäß der Gleichung

$$L = (\varphi_1 - p_1\zeta_1)/p_1 n_1$$

erfolgt, wobei $\varphi_1$ für die Größe der Phasenänderung, $k_1$ für die Wellenzahl der Phasenänderung, $n_1$ für den Brechungsindex und $\zeta_1$ für die Phasenverschiebung steht und die Phasenverschiebung alle nicht messwegbezogenen Beiträge zur Phasenänderung $\varphi_1$ einbeschließt.

**21.** Verfahren nach einem der Ansprüche 17 bis 20, **dadurch gekennzeichnet, dass** jeder der Lichtstrahlen (11, 12) einen orthogonalen Zustand aufweist, dass der Vorgang der Erzeugung überlagerter Phasenänderungen optisch phasenverschobene Strahlen (15, 16) einbeschließt, indem Phasenänderungen zwischen den Polarisationszuständen jedes der Lichtstrahlen vorgenommen werden, deren Phasenänderungsgröße sich proportional zur Anzahl der Strahlendurchgänge durch den Meßschenkel (66), umgekehrt proportional zur Wellenlänge des Lichtstrahls, proportional zur geometrischen Länge des Meßschenkels (66) und proportional zu den Brechungsindizen des Gases im Meßschenkel (66) verhält.

**22.** Verfahren nach einem der Ansprüche 17 bis 21, **gekennzeichnet durch** den Ausgleich von **durch** Schwankungen der Quellwellenlängen in der Überlagerungsmodulationsphase verursachten Fehlern.


**Revendications**

**1.** Un appareil pour mesurer les effets de l'indice de réfraction d'un gaz dans un trajet de mesure, comprenant :

une source (1, 4) d'au moins deux faisceaux de lumière (11, 12) ayant des longueurs d'onde différentes ;
un interféromètre (60) ayant une première (64) et une seconda (66) sections de mesure ayant des trajets optiques structurés et disposés de telle façon qu'au moins une section (66) a une longueur physique variable et au moins une section (66) est occupée au moins en partie par le gaz, et une section (64) peut être occupée au moins en partie par un milieu prédéterminé, la différence des longueurs des trajets optiques entre la première (64) et la seconde (66) sections de mesure variant selon la différence entre les longueurs physiques respectives de leurs trajets optiques et des propriétés du gaz et du milieu prédéterminé ;
un moyen d'introduction pour introduire une première et une seconde portions prédéterminées de chacun des faisceaux de lumière (11, 12) dans la première (64) et la seconde (66) sections de mesure respectivement, lesdites première et seconde portions prédéterminées émergeant de l'interféromètre (60) comme faisceaux de sortie (15, 16) comprenant des renseignements sur les longueurs des trajets optiques respectifs dans la première (64) et la seconde (66) sections de mesure aux longueurs d'onde des faisceaux originaux (11, 12);
un moyen de mélange (44) disposé pour combiner les faisceaux de sortie (15, 16) pour produire des signaux optiques mixtes comprenant les renseignements correspondant aux différences de phases entre chacun des faisceaux de sortie (15, 16),

**caractérisé en ce que** des faisceaux à une des longueurs d'onde de la première et de la seconde portions prédéterminées voyagent par au moins une de la première (64) et de la seconde (66) sections de mesure le long des trajets optiques prédéterminés un nombre de passages différent de celui des faisceaux de l'autre des longueurs d'onde de la première et de la seconde portions prédéterminées pour compenser les vitesses relatives auxquelles les longueurs des trajets optiques de la première (64) et de la seconde (66) sections de mesure changent,
des moyens de détection (45, 46) sont disposés pour détecter les signaux optiques mixtes et générer des signaux d'interférence électrique ($s_1$, $s_2$) comprenant des renseignements correspondant aux effets des indices de réfraction du gaz et du milieu prédéterminé aux différentes longueurs d'onde et les longueurs physiques relatives des trajets optiques de la première (64) et de la seconde (66) sections de mesure et de leurs vitesses relatives de changement ; et
des moyens électroniques (98) sont disposés pour analyser les signaux d'interférence électrique ($s_1$, $s_2$) pour déterminer les effets du gaz dans les sections de mesure (64, 66).

**2.** Un appareil selon la revendication 1, **caractérisé en ce que** les longueurs d'onde des faisceaux de lumière (11, 12) ont une relation essentiellement harmonique, et que les faisceaux (11, 12) ont chacun des états de polarisation orthogonale, et le nombre de passages des faisceaux de lumière respectifs (11, 12, 111, 112) sont reliés de façon harmonique dans une relation qui est essentiellement la même que la relation essentiellement harmonique entre les longueurs d'onde des faisceaux (11, 12), et en outre **caractérisé en ce que** les moyens d'introduction comprennent des moyens (2, 5) pour introduire une différence de fréquences entres les états de polarisation orthogonale de chacun des faisceaux de lumière (11, 12), un moyen pour aligner les faisceaux de lumière (11, 12) de telle façon qu'ils passent le long du même trajet de mesure (66), et un moyen optique pour générer des passages multiples des faisceaux de lumière (11, 12, 111, 112) dans la section de mesure (66) occupée au moins en partie par le gaz, les déphasages des faisceaux de sortie (15, 16) ayant une grandeur proportionnelle au nombre de passages dans cette section de mesure (66), la longueur physique de cette section de mesure (66) et les indices de réfraction du gaz dans cette section de mesure (66).

3. Un appareil selon la revendication 2, **caractérisé en ce que** le moyen de mélange (44) mélange les composants de polarisation de chacun des faisceaux de sortie (15, 16) pour produire des faisceaux de sortie mixtes, et **caractérisé en outre en ce que** les moyens de détection (45, 46) produisent des signaux électriques hétérodynes ($s_1$, $s_2$) à partir des intensités des faisceaux de sortie mixtes, lesquels signaux comprennent des oscillations à des fréquences hétérodynes se rapportant aux différences de fréquences entre les états de polarisation des faisceaux de lumière et comprenant des phases hétérodynes.

4. Un appareil selon la revendication 3, **caractérisé en ce que** le moyen (982) pour mélanger au moins deux des signaux électriques hétérodynes pour produire ($s_1$, $s_2$) au moins un signal électrique superhétérodyne ($S$) comprenant une onde porteuse modulée en amplitude ($C$) ayant une fréquence de modulation superhétérodyne ($F$) essentiellement égale à la moitié de la différence des deux fréquences hétérodynes correspondantes et une phase de modulation superhétérodyne essentiellement égale à la moitié de la différence entre les deux phases hétérodynes correspondantes ; et des moyens (983, 985, 986, 987) d'analyser la phase de modulation superhétérodyne afin de déterminer les fluctuations de l'indice de réfraction dans la section de mesure (66).

5. Un appareil selon la revendication 4, **caractérisé en ce que** les faisceaux de lumière (11, 12) ont chacun deux états de polarisation orthogonale, la différence de fréquence introduisant des moyens (2, 5) comprenant des moyens d'introduire la différence de fréquence entre les deux états de polarisation orthogonale de chacun des faisceaux de lumière, cette différence de fréquence étant différente pour au moins deux faisceaux.

6. Un appareil selon la revendication 4 ou 5, **caractérisé en ce que** le moyen pour aligner les faisceaux de lumière comprend des moyens optiques pour aligner tous les faisceaux de lumière de telle façon qu'ils passent par le même trajet de mesure (66).

7. Un appareil selon l'une quelconque des revendications 4 à 6, **caractérisé en ce que** le moyen optique de production des faisceaux de sortie (15, 16) comprend des moyens optiques d'introduction de déphasages entre les états de polarisation de chacun des faisceaux de lumière.

8. Un appareil selon l'une quelconque des revendications précédentes, **caractérisé en ce que** le moyen (982) de mélanger au moins deux des signaux électriques hétérodynes ($s_1$, $s_2$) comprend un moyen de mélanger au moins deux quelconques desdits signaux électriques hétérodynes ($s_1$, $s_2$) pour produire au moins ledit signal électrique superhétérodyne ($S$) comprenant l'onde porteuse modulée en amplitude ($C$) ayant la fréquence de modulation superhétérodyne ($F$).

9. Un appareil selon l'une quelconque des revendications précédentes, **caractérisé en ce que** la source (1, 4) comprend une source de rayonnement cohérent.

10. Un appareil selon l'une quelconque des revendications 4 à 7, **caractérisé en ce que** le moyen (982) pour mélanger les signaux hétérodynes est électronique.

11. Un appareil selon l'une quelconque des revendications précédentes, **caractérisé en ce que** les moyens optiques de production des faisceaux de sortie (15, 16) comprend un interféromètre à passage multiple.

12. Un appareil selon l'une quelconque des revendications 4 à 7 et 10, **caractérisé par** un moyen (60b) de compenser les erreurs de la phase de modulation superhétérodyne produites par les fluctuations dans les longueurs d'onde de la source (1,4).

13. Un appareil selon la revendication 12, **caractérisé en ce que** le moyen de compensation (60b) comprend un interféromètre ayant un trajet de mesure comprenant un trajet de contrôle (66b) d'une longueur fixe et un gaz ayant un indice de réfraction constant.

**14.** Un appareil selon la revendication 12 ou 13, **caractérisé en ce que** le moyen de compensation (60b) comprend en outre des moyens (45b, 46b) de produire des signaux hétérodynes de contrôle.

**15.** Un appareil selon l'une quelconque des revendications 12 à 14, **caractérisé en ce** le moyen de compensation (60b) comprend en outre un moyen (98b) de mélanger deux quelconques des signaux électriques hétérodynes de contrôle pour produire au moins un signal électrique superhétérodyne de contrôle comprenant une onde porteuse modulée en amplitude ayant une fréquence de modulation superhétérodyne de contrôle.

**16.** Une méthode pour mesurer les effets de l'indice de réfraction d'un gaz dans un trajet de mesure, comprenant :

la fourniture de faisceaux de lumière (11, 12) ayant des longueurs d'ondes différentes ;
la fourniture d'un interféromètre (60) ayant une première (64) et une seconde (66) sections de mesure ayant des trajets optiques structurés et disposés de telle façon qu'au moins une section (66) a une longueur physique variable et au moins une section (66) est occupée au moins en partie par le gaz, et l'autre section (64) peut être occupée au moins en partie par un milieu prédéterminé, la différence des longueurs des trajets optiques entre la première (64) et la seconde (66) sections de mesure variant selon les longueurs physiques respectives de leurs trajets optiques et les propriétés du gaz et du milieu prédéterminé ;
l'introduction d'une première et d'une seconde portions prédéterminées de chacun des faisceaux de lumière (11, 12) dans la première (64) et la seconde (66) sections de mesure de telle façon que la première et la seconde portions prédéterminées émergent de l'interféromètre (60) comme faisceaux de sortie (15, 16) comprenant des renseignements sur les longueurs des trajets optiques respectifs dans la première (64) et la seconde (66) sections de mesure aux longueurs d'onde des faisceaux originaux (11, 12) ;
le mélange des faisceaux de sortie (15, 16) pour produire des signaux optiques mixtes comprenant les renseignements correspondant aux différences de phases entre les faisceaux de sortie (15, 16),

**caractérisé en ce que** des faisceaux à l'une des longueurs d'onde de la première et de la seconde portions prédéterminées voyagent par au moins une de la première (64) et de la seconde (66) sections de mesure le long des trajets optiques prédéterminés un nombre de passages différent de celui des faisceaux de l'autre des longueurs d'onde de la première et de la seconde portions prédéterminées pour compenser les vitesses relatives auxquelles les longueurs des trajets optiques de la première (64) et de la seconde (66) sections de mesure changent,
en détectant les signaux optiques mixtes et en générant des signaux d'interférence électrique ($s_1$, $s_2$) comprenant des renseignements correspondant aux effets des indices de réfraction du gaz et du milieu prédéterminé aux différentes longueurs d'onde et les longueurs relatives des trajets optiques de la première (64) et de la seconde (66) sections de mesure et de leurs vitesses relatives de changement, et
en analysant de façon électronique les signaux d'interférence électrique ($s_1$, $s_2$) pour déterminer les effets du gaz dans les sections de mesure (64, 66).

**17.** Une méthode selon la revendication 16, **caractérisée en ce que** les faisceaux de lumière (11, 12) ont des longueurs d'onde ayant une relation essentiellement harmonique, et **caractérisée en outre par** la fourniture d'un déphasage hétérodyne basé sur les longueurs d'onde des sources, le nombre de passages comprenant chacun un passage multiple ayant une relation harmonique similaire aux longueurs d'ondes reliées de façon harmonique pour fournir une phase de modulation superhétérodyne essentiellement insensible aux déplacements le long de la section de mesure (66) dont au moins une partie est occupée par le gaz.

**18.** Une méthode selon la revendication 17, **caractérisée en ce que** la section de mesure (66), dont au moins une partie est occupée par le gaz, comprend une section de mesure dans un interféromètre à passage multiple (60) ayant un stade (67) mobile le long de la section de mesure (66), la phase de modulation superhétérodyne fournissant une étape comprenant la fourniture d'une phase de modulation superhétérodyne essentiellement insensible au mouvement du stade dans la section de mesure (66).

**19.** Une méthode selon la revendication 17 ou 18, **caractérisée par** la détermination d'une distance $L$ le long du trajet de mesure (66) indépendamment des fluctuations de l'indice de réfraction $n$.

**20.** Une méthode selon la revendication 19, **caractérisée en ce que** l'étape de détermination de la distance détermine la distance L selon l'équation :

$$L = (\varphi_1 - p_1\zeta_1)/\, p_1 n_1$$

où $\varphi_1$ représente la grandeur du déphasage, $k_1$ représente le nombre d'onde du déphasage, $n_1$ représente l'indice de réfraction et $\zeta_1$ représente le décalage de phase, le décalage de phase comprenant toutes les contributions au déphasage $\varphi_1$ qui ne se rapportent pas au trajet de mesure.

**21.** Une méthode selon l'une quelconque des revendications 17 à 20, **caractérisée en ce que** chacun des faisceaux de lumière (11, 12) a des états orthogonaux et l'étape de fourniture des déphasages hétérodynes comprend des faisceaux déphasés (15, 16) produits de façon optique par l'introduction de déphasages entre les états de polarisation de chacun des faisceaux de lumière ayant une grandeur de déphasage proportionnelle au nombre de passages dans la section de mesure (66), inversement proportionnelle à la longueur d'onde du faisceau optique, proportionnelle à longueur physique de la section de mesure (66), et proportionnelle aux indices de réfraction du gaz dans la section de mesure (66).

**22.** Une méthode selon l'une quelconque des revendications 17 à 21, **caractérisée par** la compensation des erreurs dans la phase de modulation superhétérodyne produites par les fluctuations dans les longueurs d'onde de la source.

Figure 1

Figure 2

Figure 3

Figure 4